# FASCICULE DE BREVET EUROPEEN

(11) **EP 1 243 831 B1**
(45) Date de publication et mention de la délivrance du brevet: **21.01.2009**
(21) Numéro de dépôt: 02290547.5
(22) Date de dépôt: 06.03.2002
(51) Int. Cl.: F16L 11/06, F16L 11/12

(54) **Tube multicouche en matière plastique pour le transfert de fluides**
Mehrschichtiges Kunststoffrohr zum Fördern von Flüssigkeiten
Multilayer plastic tube for conveying fluids

(30) Priorité: 23.03.2001 FR 0103931
(43) Date de publication de la demande: 25.09.2002
(73) Titulaire: ARKEMA FRANCE, 92700 Colombes (FR)
(72) Inventeur: Bellet, Gaelle, 27000 Evreux (FR); Bonnet, Anthony, 27470 Serquigny (FR); Merziger, Joachim, 27000 Evreux (FR)
(74) Mandataire: Delprat, Corinne

(56) Documents cités:
- EP-A- 0 731 308
- EP-A- 1 036 968
- WO-A-96/13680
- FR-A- 2 765 520
- US-A- 4 331 786
- US-A- 5 038 833

## Description

### [Domaine de l'invention]

La présente invention concerne des tubes à base de polyamides et d'EVOH (copolymère éthylène- alcool vinylique) pour le transfert de fluide.

A titre d'exemple de tubes pour le transfert de fluide on peut citer les tubes pour l'essence, et en particulier pour amener l'essence du réservoir jusqu'au moteur des automobiles. A titre d'autres exemples de transfert de fluide on peut citer les fluides mis en oeuvre dans la fuel cell (pile à combustible), le système à CO2 pour le refroidissement et l'air conditionné, les systèmes hydrauliques, le circuit de refroidissement, l'air conditionné et les transferts de puissance à moyenne pression.

Pour des raisons de sécurité et de préservation de l'environnement les constructeurs d'automobiles imposent à ces tubes à la fois des caractéristiques mécaniques comme la résistance à l'éclatement et la flexibilité avec une bonne tenue aux chocs à froid (-40°C) ainsi qu'à température élevée (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur. Ces tubes sont fabriqués par coextrusion des différentes couches selon les techniques habituelles des thermoplastiques.

### [l'art antérieur et le problème technique]

Parmi les caractéristiques du cahier des charges des tubes d'essence, cinq sont particulièrement difficiles à obtenir conjointement de façon simple :
- tenue aux chocs à froid (-40°C), le tube ne se brise pas,
- tenue aux carburants
- tenue à température élevée (125°C),
- très faible perméabilité à l'essence,
- une bonne stabilité dimensionnelle du tube en utilisation avec de l'essence.
Dans les tubes multicouches de structures diverses, la tenue aux chocs à froid reste imprévisible avant d'avoir réalisé les tests normés de résistance aux chocs à froid.

Par ailleurs, il est déjà connu de la demande de brevet EP 0781799 que dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à 10⁶ ohms. Il est connu d'abaisser la résistivité superficielle de résines ou matériaux polymériques en leur incorporant des matériaux conducteurs et/ou semiconducteurs tels que le noir de carbone, les fibres en acier, les fibres de carbone, les particules (fibres, plaquettes, sphères) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charge augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section Il pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsque un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

On connait aussi de la demande de brevet EP 0 731 308 des tubes à base de polyamides et d'EVOH pour le transport d'essence. Ces tubes peuvent avoir une structure à 4 couches comprenant respectivement une couche extérieure de PA 12, une couche de liant qui est une polyoléfine greffée, une couche d'EVOH et une couche intérieure en contact avec l'essence comprenant un mélange de polyamide et de polyoléfine à matrice polyamide.

Le brevet EP 428833 décrit un tube à 3 couches comprenant respectivement une couche extérieure de PA 12, une couche de liant qui est une polyoléfine greffée et une couche intérieure d'EVOH en contact avec l'essence.

Les brevets EP 428834 et EP 477606 décrivent un tube à 5 couches comprenant respectivement une couche extérieure de PA 12, une couche de liant qui est une polyoléfine greffée, une couche de PA 6, une couche d'EVOH et une couche intérieure en PA 6 en contact avec l'essence.

Le brevet US 5038833 décrit un tube à 3 couches comprenant respectivement une couche extérieure de PA 12, une couche d'EVOH et une couche intérieure en PA 12 en contact avec l'essence.

Tous ces tubes ont de bonnes propriétés mais l'épaisseur des couches de liant n'est pas facile à controler et il peut en resulter des délaminations. Dans le tube décrit dans US 5038833 il n'y a pas de liant mais il se produit des délaminations.

On a maintenant trouvé un tube comprenant respectivement une couche extérieure en polyamide, une couche de liant en copolyamide, une couche d'EVOH, une autre couche de liant en copolyamide et une couche intérieure en polyamide en contact avec l'essence. Le liant en copolyamide, qui est un mélange d'un copolyamide 6/12 riche en 6 et d'un copolyamide 6/12 riche en 12, est particulièrement performant et de plus il est facile à coextruder.

### [Brève description de l'invention]

La présente invention concerne un tube multicouche comprenant dans sa direction radiale de l'extérieur vers l'intérieur :
- une couche extérieure formée d'un polyamide
- une couche formée d'un copolyamide,
- une couche formée d'un EVOH,
- une couche formée d'un copolyamide,
- une couche intérieure formée d'un polyamide
les couches étant successives et adhérant entre-elles dans leur zone de contact respective, le copolyamide des couches adjacents à la couche d'EVOH étant un mélange d'un copolyamide 6/12 riche en 6 et d'un copolyamide 6/12 riche en 12.

Avantageusement, la couche intérieure est formée par un mélange de polyamide et de noir de carbone électroconducteur produisant une résistivité surfacique inférieure à 10⁶ Ω.

Ces tubes peuvent avoir un diamètre extérieur de 6 à 110 mm et une une épaisseur de l'ordre de 0,5 à 5mm.

Avantageusement, le tube d'essence selon l'invention a un diamètre extérieur allant de 6 à 12 mm, une épaisseur totale de 0,36 mm à 1,95 mm,
une épaisseur de 50 à 700 µm pour la couche extérieure en polyamide,
une épaisseur de 10 à 150 µm pour les couches en copolyamide,
une épaisseur de 10 à 200 µm pour la couche en EVOH,
une épaisseur de 100 à 500 µm pour la couche de polyamide intérieure pouvant être chargée de noir de carbone électroconducteur,

Le tube de la présente invention est très peu perméable à l'essence particulièrement aux hydrocarbures et à leurs additifs, en particulier les alcools comme le méthanol et l'éthanol ou encore les éthers comme le MTBE ou l'ETBE. Ces tubes ont aussi une bonne tenue aux carburants et aux huiles de lubrification du moteur.

Ce tube présente de très bonnes propriétés mécaniques à basse ou à haute température.

Le tube de l'invention peut comprendre une couche supplémentaire constituée de chutes de fabrication ou de tubes de l'invention présentant des défauts, ces chutes ou ces tubes sont broyés puis fondus et coextrudés avec les autres couches. Cette couche peut se situer entre la couche extérieure et la couche de copolyamide.

### [Description détaillée de l'invention]

**S'agissant de la couche extérieure,** on entend par polyamide les produits de condensation :
- d'un ou plusieurs aminoacides, tels les acides aminocaproïque,
amino-7-heptanoïque, amino-11-undécanoïque et amino-12-dodécanoïque d'un ou plusieurs lactames tels que caprolactame, oenantholactame et laurolactame;
- d'un ou plusieurs sels ou mélanges de diamines telles l'hexaméthylène-diamine, la dodécaméthylènediamine, la métaxylyènediamine, le bis-p-aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de plusieurs de ces monomères ce qui conduit à des copolyamides.

Les diamines aliphatiques sont des α,ω-diamines contenant entre les groupes amino terminaux au moins 6 atomes de carbone, de préférence de 6 à 10. La chaîne carbonée peut être linéaire (polyméthylènediamine) ou ramifiée ou encore cycloaliphatique. Des diamines préférées sont l'hexaméthylènediamine (HMDA), la dodécaméthylènediamine, la décaméthylènediamine.

Les diacides carboxyliques peuvent être aliphatiques, cycloaliphatiques ou aromatiques. Les diacides carboxyliques aliphatiques sont des α,ω-diacides carboxyliques possédant au moins 4 atomes de carbone (non compris les atomes de carbone des groupes carboxyliques), de préférence au moins 6, dans la chaîne carbonée linéaire ou ramifiée. Les diacides sont les acides azélaïque, sébacique et 1,12-dodécanoïque. A titre d'illustration de tels PA, on peut mentionner :
le polyhexaméthylènesebacamide (PA-6,10),
le polyhexaméthylènedodécanediamide (PA-6,12),
le poly(undécanoamide) (PA-11),
le poly(laurolactame (2-Azacyclotridécanone) (PA-12),
le polydodécaméthylènedodécanediamide (PA-12,12),
le polycapronamide (PA-6),
le polyhexaméthylèneadipamide (PA-6,6).

On peut utiliser des mélanges de polyamide. On utilise avantageusement le PA-6, le PA-6,6, le PA 11 et le PA 12.

Les PA ont une masse moléculaire moyenne en nombre Mn en général supérieure ou égale à 5000. Leur viscosité inhérente (mesurée à 20°C pour un échantillon de 0,5 g dans 100 g de méta-crésol) est en général supérieure à 0,7.

De préférence, on utilise le polyamide 12. Avantageusement, le polyamide de la couche extérieure est plastifié par des plastifiants usuels tels que le n-butyl benzène sulfonamide (BBSA) et les copolymères comprenant des blocs polyamides et des blocs polyéthers.

Les copolymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Les séquences polyamides à bouts de chaînes diamines proviennent, par exemple, de la condensation d'acides alpha-oméga aminocarboxyliques, de lactames ou de diacides carboxyliques et diamines en présence d'une diamine limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre M̅n̅ des séquences polyamides est comprise entre 300 et 15 000 et de préférence entre 600 et 5 000. La masse M̅n̅ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inherente entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10 / 90 et 60 / 40. On peut citer par exemple le copolymère à blocs PA 6 et blocs PTMG et le copolymère à blocs PA 12 et blocs PTMG.

S'agissant des couches de copolyamide, le copolyamide est un mélange d'un copolyamide 6/12 riche en 6 et d'un copolyamide 6/12 riche en 12. S'agissant du mélange de copolyamides 6/12 l'un comprenant en poids plus de 6 que de 12 et l'autre plus de 12 que de 6, le copolyamide 6/12 résulte de la condensation du caprolactame avec le lauryllactame. Il est clair que "6" désigne les motifs dérivés du caprolactame et "12" désigne les motifs dérivés du lauryllactame. On ne sortirait pas du cadre de l'invention si le caprolactame était remplacé en tout ou partie par l'acide aminocaproïque, de même pour le lauryllactame qui peut être remplacé par l'acide aminododecanoïque. Ces copolyamides peuvent comprendre d'autres motifs pourvu que les rapports des proportions de 6 et de 12 soient respectées.

Avantageusement le copolyamide riche en 6 comprend 60 à 90% en poids de 6 pour respectivement 40 à 10% de 12.

Avantageusement le copolyamide riche en 12 comprend 60 à 90% en poids de 12 pour respectivement 40 à 10% de 6.

Quant aux proportions du copolyamide riche en 6 et du copolyamide riche en 12 elles peuvent être, en poids, de 40/60 à 60/40 et de préférence 50/50.

Ces mélanges de copolyamides peuvent aussi comprendre jusqu'à 30 parties en poids d'autres (co)polyamides ou de polyoléfines greffées pour 100 parties des copolyamides riches en 6 et riches en 12.

Ces copolyamides ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches adjacentes. Ces produits se fabriquent par les techniques habituelles des polyamides. Des procédés sont décrits dans les brevets US 4424864, US 4483975, US 4774139, US 5459230, US 5489667, US 5750232 et US 5254641.

**S'agissant de la couche formée de copolymère EVOH,** elle peut être constituée d'EVOH ou de mélange à base d'EVOH. l'EVOH est aussi appelé copolymère éthylène-acétate de vinyle saponifié. Le copolymère éthylène-acétate de vinyle saponifié à employer selon la présente invention est un copolymère ayant une teneur en éthylène de 20 à 70 % en moles, de préférence de 25 à 70 % en moles, le degré de saponification de son composant acétate de vinyle n'étant pas inférieur à 95 % en moles. Avec une teneur en éthylène inférieure à 20 % en moles, les propriétés barrière dans des conditions de forte humidité ne sont pas aussi élevées qu'on le souhaiterait, tandis qu'une teneur en éthylène dépassant 70 % en moles conduit à des baisses des propriétés barrière. Lorsque le degré de saponification ou d'hydrolyse est inférieur à 95 % en moles, les propriétés barrière sont sacrifiées.

On entend par propriétés barrière l'imperméabilité aux gaz, aux liquides et en particulier à l'oxygene, à l'essence pour les automobiles.

Parmi ces copolymères saponifiés, ceux qui ont des indices de fluidité à chaud dans l'intervalle de 0,5 à 100 g/10 minutes sont particulièrement utiles. Avantageusement le MFI est choisi entre 5 et 30 (g / 10min à 230°C sous 2,16 kg), "MFI" abréviation de "Melt Flow Index" désigne l'indice de fluidité à l'état fondu.

Il est entendu que ce copolymère saponifié peut contenir de faibles proportions d'autres ingrédients comonomères, y compris des α-oléfines comme le propylène, l'isobutène, l'α-octène, l'α-dodécène, l'α-octadécène, etc..., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

Quant aux mélanges à base d'EVOH ils sont tels que l'EVOH forme la matrice, c'est à dire qu'il représente au moins 40% en poids du mélange et de préférence au moins 50%. Les autres constituants du mélange sont choisis parmi les polyolefines, les polyamides et éventuellement des polymères fonctionnels.

**A titre de premier exemple de ces mélanges à base d'EVOH** on peut citer les compositions comprenant (en poids) :
- 55 à 99,5 parties de copolymère EVOH,
- 0,5 à 45 parties de polypropylène et de compatibilisant, leurs proportions étant telles que le rapport de la quantité de polypropylène sur la quantité de compatibilisant est compris entre 1 et 5.

Avantageusement le rapport du MFI de l'EVOH au MFI du polypropylène est plus grand que 5 et de préférence compris entre 5 et 25. Avantageusement le MFI du polypropylène est compris entre 0,5 et 3 (en g/10mm à 230°C sous 2,16 kg) . Selon une forme avantageuse le compatibilisant est un polyéthylène portant des greffons polyamide et il résulte de la réaction (i) d'un copolymère de l'éthylène et d'un monomère insaturé X greffé ou copolymérisé avec (ii) un polyamide. Le copolymère de l'éthylène et d'un monomère insaturé X greffé ou est tel que X est copolymérisé et il peut être choisi parmi les copolymères éthylène-anhydride maléique et les copolymères éthylène - (méth)acrylate d'alkyle - anhydride maléique, ces copolymères comprennant de 0,2 à 10 % en poids d'anhydride maléique et de 0 à 40 % en poids de (méth)acrylate d'alkyle. Selon une autre forme avantageuse le compatibilisant est un polypropylène portant des greffons polyamide qui résulte de la réaction (i) d'un homopolymere ou d'un copolymère du propylène comprenant un monomère insaturé X, greffé ou copolymérisé, avec (ii) un polyamide. Avantageusement X est greffé. Le monomère X est avantageusement un anhydride d'acide carboxylique insaturé tel que par exemple l'anhydride maleique.

**A titre de deuxième exemple de ces mélanges à base d'EVOH** on peut citer les compositions comprenant :
- 50 à 98 % en poids d'un copolymère EVOH
- 1 à 50 % en poids d'un polyéthylène
- 1 à 15 % en poids d'un compatibilisant constitué d'un mélange d'un polyéthylène LLDPE ou métallocène et d'un polymère choisi parmi les élastomères, les polyéthylènes de très basse densité et les polyéthylènes métallocènes, le mélange étant cogreffé par un acide carboxylique insaturé ou un dérivé fonctionnel de cet acide.

Avantageusement le compatibilisant est tel que le rapport MFI₁₀/MFI₂ est compris entre 5 et 20, où MFI₂ est l'indice d'écoulement en masse fondue à 190°C sous une charge de 2,16 kg, mesuré suivant ASTM D1238, MFI₁₀ est l'indice d'écoulement en masse fondue à 190°C sous une charge de 10 kg suivant ASTM D1238.

**A titre de troisième exemple de ces mélanges à base d'EVOH** on peut citer les compositions comprenant :
- 50 à 98 % en poids d'un copolymère EVOH
- 1 à 50 % en poids d'un copolymère éthylène - (méth)acrylate d'alkyle,
- 1 à 15 % en poids d'un compatibilisant résultant de la réaction (i) d'un copolymère de l'éthylène et d'un monomère insaturé X greffé ou copolymérisé avec (ii) un copolyamide.
Avantageusement le copolymère de l'éthylène et d'un monomère insaturé X greffé ou copolymérisé est tel que X est copolymèrisé et c'est un copolymère de l'éthylène et de l'anhydride maléique ou un copolymère de l'éthylène, d'un (méth)acrylate d'alkyle et de l'anhydride maléique. Avantageusement ces copolymères comprennent de 0,2 à 10 % en poids d'anhydride maléique et de 0 à 40 % en poids de (méth)acrylate d'alkyle.

**S'agissant de la couche intérieure,** en polyamide il peut être choisi parmi les polyamides cités pour la couche extérieure. Ce polyamide peut, comme celui de la couche extérieure, être plastifié par des plastifiants usuels tels que le n-butyl benzène sulfonamide (BBSA) et les copolymères comprenant des blocs polyamides et des blocs polyéthers. Avantageusement on utilise le PA 12 ou le PA 11. Selon une forme particuliere le polyamide de cette couche intérieure n'est pas plastifié.
Elle peut aussi contenir du noir de carbone avantageusement en quantité suffisante pour que la résistivité surfacique soit inférieure à 10⁶ Ω. Cette quantité de noir est habituellement comprise entre 5 et 30 parties en poids de noir pour 100 parties de l'ensemble du polyamide et de ses plastifiants et autres additifs.

Ces tubes multicouche peuvent être cylindriques de diamètre constant ou annelés.

De manière classique, ces tubes peuvent comporter des gaines de protection notamment en caoutchouc pour les protéger des points chauds du moteur.

### [Exemples]

On a fabriqué par coextrusion des tubes de diamètre extérieur 8 mm et d'épaisseur 1 mm.

### Exemple N°1 - Tube N° 1

La couche extérieure d'une épaisseur de 500 µm est constituée d'un polyamide dont la formulation est la suivante :
- 85 % de polyamide 12 ayant une viscosité inhérente de 1,65
- 7 % de n-butylbenzène sulfonamide (BBSA)
- 6 % d'élastomère thermoplastique à blocs polyamides et blocs polyethers de dureté shore D égale à 55 et de point de fusion 159°C
- 2 % d'additifs (colorants, lubrifiants, stabilisants).

La couche intérieure d'une épaisseur de 300 µm est identique à la couche extérieure .

Les couches de copolyamide présentent une épaisseur de 50 µm et sont constituées d'un mélange (50% / 50% en poids) de Platamid® 1 et de Platamid® 2. Le Platamid®1 est un copolyamide produit par polycondensation de 60 % en poids de laurolactame et de 40 % en poids de caprolactame. Ce copolyamide a un domaine de température de fusion de 130 - 140°C (Norme DIN 53736 B) et une viscosité relative en solution de 1,75 - 1,90 (selon la Norme DIN 53727, m-crésol, 0,5 g / 100 ml, 25°C viscosimètre Ubbelohde)). le Platamid® 2 est un copolyamide produit par polycondensation de 30 % en poids de laurolactame et de 70 % en poids de caprolactame. Ce copolyamide a un domaine de température de fusion de 185 - 190°C (Norme DIN 53736 B) et une viscosité relative en solution de 1,90 (selon la Norme DIN 53727, m-crésol, 0,5 g /100 ml, 25°C viscosimètre Ubbelohde)).

### Exemple N° 2 - Tube N°2

La couche extérieure d'une épaisseur de 500 µm est constituée du même polyamide que la couche extérieure du tube précédent.

La couche intérieure d'une épaisseur de 300 µm est un mélange de 100 parties en poids de la composition de la couche exterieure et de 27 parties de noir de carbone. On a utilisé le noir ENSACO® 250 de la société MMM Carbon (noir présentant une surface d'adsorption de 65 m²/g une taille de particule primaire de 38 nm et une taille d'agrégat d'environ 600 nm)

Les couches de copolyamide sont les mêmes que dans le tube précédent (même épaisseur et composition)

## Revendications

1. Tube multicouche comprenant dans sa direction radiale de l'extérieur vers l'intérieur :
- une couche extérieure formée d'un polyamide
- une couche formée d'un copolyamide,
- une couche formée d'un EVOH,
- une couche formée d'un copolyamide,
- une couche intérieure formée d'un polyamide
les couches étant successives et adhérant entre-elles, le copolyamide des couches adjacentes à la couche d'EVOH est un mélange d'un copolyamide 6/12 riche en 6 et d'un copolyamide 6/12 riche en 12.

2. Tube selon la revendication 1 dans lequel la couche intérieure contient du noir de carbone en quantité suffisante pour que la résistivité surfacique soit inférieure à 10⁶ Ω.

3. Tube selon l'une quelconque des revendications précédentes dans lequel le polyamide de la couche extérieure est choisi parmi le PA 11 et le PA 12.

4. Tube selon l'une quelconque des revendications précédentes dans lequel le polyamide de la couche intérieure est choisi parmi le PA 11 et le PA 12.

5. Tube selon l'une quelconque des revendications 1 à 4 dans lequel dans les couches adjacentes à la couche d'EVOH le copolyamide riche en 6 comprend 60 à 90% en poids de 6 pour respectivement 40 à 10% de 12.

6. Tube selon l'une quelconque des revendications précédentes dans lequel dans les couches adjacentes à la couche d'EVOH le copolyamide riche en 12 comprend 60 à 90% en poids de 12 pour respectivement 40 à 10% de 6.

7. Tube selon l'une quelconque des revendications précédentes dans lequel, dans les couches adjacentes à la couche d'EVOH, les proportions du copolyamide riche en 6 et du copolyamide riche en 12 sont, en poids, de 40/60 à 60/40.

8. Tube selon l'une quelconque des revendications 1 à 7, **caractérisé en ce que** le mélange d'un copolyamide 6/12 riche en 6 et d'un copolyamide 6/12 riche en 12 comprend en outre jusqu'à 30 parties en poids d'autres (co)polyamides ou de polyoléfines greffées pour 100 parties des copolyamide 6/12 riche en 6 et copolyamide 6/12 riche en 12.

9. Utilisation d'un tube selon l'une quelconque des revendications 1 à 8 pour le transfert de fluides, notamment de carburants et, en particulier, d'essence.

## Claims

1. Multilayer tube comprising, in its radial direction from the outside inwards:
- an outer layer formed from a polyamide,
- a layer formed from a copolyamide,
- a layer formed from an EVOH,
- a layer formed from a copolyamide,
- an inner layer formed from a polyamide,
the layers being successive and adhering to one another; the copolyamide of the layers adjacent to the EVOH layer is a blend of a 6-rich 6/12 copolyamide and a 12-rich 6/12 copolyamide.

2. Tube according to Claim 1, in which the inner layer contains carbon black in an amount sufficient to produce a surface resistivity of less than 10⁶ Ω.

3. Tube according to either of the preceding claims, in which the polyamide of the outer layer is chosen from PA-11 and PA-12.

4. Tube according to any one of the preceding claims, in which the polyamide of the inner layer is chosen from PA-11 and PA-12.

5. Tube according to any one of Claims 1 to 4, in which, in the layers adjacent to the EVOH layer, the 6-rich copolyamide comprises 60 to 90% by weight of 6 per 40 to 10% of 12 respectively.

6. Tube according to any one of the preceding claims, in which, in the layers adjacent to the EVOH layer, the 12-rich copolyamide comprises 60 to 90% by weight of 12 per 40 to 10% of 6 respectively.

7. Tube according to any one of the preceding claims, in which, in the layers adjacent to the EVOH layer, the proportions of the 6-rich copolyamide and the 12-rich copolyamide are from 40/60 to 60/40 by weight.

8. Tube according to any one of Claims 1 to 7, **characterized in that** the blend of a 6-rich 6/12 copolyamide and a 12-rich 6/12 copolyamide further includes up to 30 parts by weight of other grafted polyolefins or (co)polyamides per 100 parts of 6-rich 6/12 copolyamide and 12-rich 6/12 copolyamide.

9. Use of a tube according to any one of Claims 1 to 8 for transporting fluids, especially fuels and, in particular, petrol.

## Patentansprüche

1. Mehrschichtiges Rohr, das in Radialrichtung von außen nach innen aufweist:
- eine äußere Schicht aus einem Polyamid,
- eine Schicht aus einem Copolyamid,
- eine Schicht aus einem EVOH,
- eine Schicht aus einem Copolyamid,
- eine innere Schicht aus einem Polyamid,
wobei die Schichten aufeinanderfolgend sind und untereinander haften und das Copolyamid der an die Schicht aus EVOH angrenzenden Schichten eine Mischung eines an 6 reichen 6/12-Copolyamids und eines an 12 reichen 6/12-Copolyamids ist.

2. Rohr nach Anspruch 1, bei dem die innere Schicht Ruß in einer Menge enthält, die dafür ausreicht, dass der Oberflächenwiderstand kleiner als 10⁶ Ω ist.

3. Rohr nach einem der vorhergehenden Ansprüche, bei dem das Polyamid der äußeren Schicht unter PA 11 und PA 12 ausgewählt ist.

4. Rohr nach einem der vorhergehenden Ansprüche, bei dem das Polyamid der inneren Schicht unter PA 11 und PA 12 ausgewählt ist.

5. Rohr nach einem der Ansprüche 1 bis 4, bei dem das an 6 reiche Copolyamid in den an die Schicht aus EVOH angrenzenden Schichten 60 bis 90 Gew.-% 6 auf entsprechend 40 bis 10 % 12 enthält.

6. Rohr nach einem der vorhergehenden Ansprüche, bei dem das an 12 reiche Copolyamid in den an die Schicht aus EVOH angrenzenden Schichten 60 bis 90 Gew.-% 12 auf entsprechend 40 bis 10 % 6 enthält.

7. Rohr nach einem der vorhergehenden Ansprüche, bei dem die Mengenanteile des an 6 reichen Copolyamids und des an 12 reichen Copolyamids in den an die Schicht aus EVOH angrenzenden Schichten, bezogen auf die Gewichte, 40/60 bis 60/40 betragen.

8. Rohr nach einem der Ansprüche 1 bis 7, **dadurch gekennzeichnet, dass** die Mischung eines an 6 reichen Copolyamids 6/12 und eines an 12 reichen Copolyamids 6/12 ferner bis zu 30 Gewichtsteile an anderen (Co)polyamiden oder gepfropften Polyolefinen auf 100 Teile des an 6 reichen Copolyamids 6/12 und des an 12 reichen Copolyamids 6/12 enthält.

9. Verwendung eines Rohrs nach einem der Ansprüche 1 bis 8 zum Transport von Fluiden, insbesondere von Treibstoffen und besonders von Benzin.
